# EUROPEAN PATENT APPLICATION

(11) **EP 1 400 444 A2**
(43) Date of publication of application: **24.03.2004**
(21) Application number: 03028529.0
(22) Date of filing: 17.06.1999
(51) Int. Cl.: B64B 1/06, B64B 1/26, B64B 1/60

(54) **Autonomous stratospheric airship**

(30) Priority: 11.12.1998 US 111835 P; 15.02.1999 US 247878
(62) Divisional of application: 99961506.5
(71) Applicant: SOUTHWEST RESEARCH INSTITUTE, San Antonio, TX 78228-0510 (US)
(72) Inventor: Perry, William, Dean, 78023, Texas (US); Jaeckle, Thomas, H., 78253 Texas (US); Epley, Lawrence, E., 78257 Texas (US); Black, Allan, B., 78232 Texas (US)
(74) Representative: Winter, Brandl, Fürniss, Hübner, Röss, Kaiser, Polte, Partnerschaft

(57) **Abstract**

As a way of significantly reducing the cost of providing an autonomous stratospheric airship, this airship (10) comprises a hull (20) defining an enclosed cavity; a lifting gas and at least one solar array (910) disposed within said cavity; a forward ballast reservoir; an aft ballast reservoir; a ballast management subsystem attached to said hull and in fluid communication with said forward and aft ballast reservoirs; an equipment bay attached to said hull, said bay having a multiplicity of energy storage units and an autonomous control system; a propulsion system (80) attached to said hull and in electrical communication with said at least one solar array and said energy storage units; and a multiplicity of tail fins (90), said fins being attached to said hull.

## Description

### 1. FIELD OF THE INVENTION

The present invention relates to the field of lighter-than-air type craft and, more particularly, to an autonomous stratospheric airship having a neutrally buoyant structure at flight altitude, making use of regenerative electric energy storage and collection. This application claims the benefit of U.S. Provisional Patent Application Number 60/111,835, filed on December 11, 1998 and U.S. Utility Patent Application Number 09/247,878, filed on February 15, 1999.

### 2. DESCRIPTION OF THE RELATED ART

In the past, there have been designed and used a series of dirigibles, other types of lighter-than-air vehicles, hot-air balloons, and so forth, for passenger transport, rescue work, lift capabilities, and transport of goods and supplies. The present invention relates to a powered airship having a buoyant structure designed specifically for operations in the stratosphere. It incorporates an autonomous navigation capability and a regenerative solar electric energy collection and storage system, enabling the airship to remain aloft for extended periods of time, while following a specified course and gathering mission-specific data.

The prior art reveals several attempts at providing a portion of the capabilities embodied in the present invention, but none was found to incorporate all of the capabilities mentioned below and each such attempt tends to utilize rather complicated mechanical structures. U.S. Patent Nos. 5,333,817 and 5,538,203 both disclose a buoyancy adjustment system for a lighter-than-air vehicle, involving a series of ballonets, each arranged along the longitudinal axis of the airship in equal numbers. The object of these inventions is to provide a system of independent control for ballonet inflation/deflation which dispenses with ducted coupling to the individual ballonets. In addition, U.S. Patent No. 5,538,203 provides rapid deflation of the same ballonet system, instead of merely venting it to the atmosphere. In either case, this system is rather primitive and does not take into account the differential pressure between the atmosphere, the surrounding airship gas bag, and the pressure within individual ballonets.

U.S. Patent No. 5,348,254, issued to Nakada, claims an airship design for flights of long duration powered by solar cell batteries and a hydrogen generation system. This system obviates the need for batteries by electrolytic generation of hydrogen; however, accidental puncture of the hydrogen storage envelope can easily result in complete destruction of the airship.

U.S. Patent No. 4,995,572, issued to Piasecki, describes a multi-stage, high-altitude data acquisition platform comprising the combination of a low-altitude dirigible and a stratospheric balloon for use at 60,000 ft. and above. The primary object of this invention is to provide a stable launch platform for lifting heavy payloads to stratospheric altitudes. The airship contains a silo used to retain the stratospheric balloon for launch from low altitudes. Such a multi-vehicle payload lifting system is rather complex and unnecessary for accomplishing the advantages and objectives of the present invention.

U.S. Patent No. 4,204,656 issued to Seward III, discloses a bi-axial propulsing control system for airships. This system, as illustrated in the patent drawings, does not distribute the propulsion motor loading equally among the ascent/descent and left/right movement axes. In addition, the torquing forces of the propulsion motor are applied at the ends of the orientation axes, causing greatly increased loading on the propulsion direction drive system.

French Patent No. 86 02734 discloses a dual-axis, symmetric propulsion system for airships. This system comprises a set of two or more motors which move in concert to direct the motion of the airship. This application requires a plurality of motors, unnecessary to implementation of the present invention.

U.S. Patent No. 4,934,631, issued to Birbas, describes a lighter-than-air vehicle comprising a framework surrounded by a series of inflatable lift bags. Each bag contains a heating element and lifting gas. The propulsion system comprises a shrouded propeller with vanes to direct the propulsive force. While this airship makes use of a single propulsion unit to navigate through the air, it entails a complicated assembly structure which is impractical for inexpensive construction. In addition, the airship has no means of autonomous navigation or maintaining station above a fixed point of the surface of the earth in autonomous fashion.

Japanese Patent No. 5-221387A discloses an airship constructed of transparent materials wherein a solar array is disposed to receive energy from the sun. However, this design is not constructed for multiple-axis array adjustment to capture the maximum amount of solar energy based on the airship position in relation to the sun. Only a single, longitudinal, axis of rotation for the array is shown. Other patents, such as Japanese Patent No. 54-35994, U.S. Patent No. 5,518,205 issued to Wurst et al., and U.S. Patent No. 4,364,532 issued to Stark, all describe solar-powered airships with solar cells disposed on the surface structure of the ship. Again, the inherent disposition of the cell structure precludes the use of optimal positioning of the cells to capture the maximum amount of solar energy to be gained given a varied position of the airship in relation to the sun.

None of the aforementioned inventions are directed toward an autonomous platform specifically designed for flight in the lower stratosphere. In addition, none are directed toward an airship which is capable of controlling operational altitude, including maintenance of a fixed position over a point on the surface of the earth, or navigation between predetermined waypoints. Further, none of the prior art is directed toward an autonomous airship having a specially constructed solar array energy extraction source which provides sufficient energy for power during the day, and stores sufficient energy for continuous night-time operation.

Therefore, it is desirable to have an autonomous airship specifically designed for flight in the lower stratosphere, with the ability to maintain a fixed position over a point on the surface of the earth, or navigate between predetermined waypoints. Additionally, it is desirable to have an autonomous airship capable of controlling its operational altitude, using ballonets to control the pitch axis attitude. Furthermore, it is desirable to have an autonomous airship which uses a single motor for propulsion that evenly distributes the propulsive forces along the directive axes of the articulating means. It is also desirable to have an autonomous airship which can utilize solar energy to power propulsion during the day and additionally, store sufficient energy for continuous operation throughout the night.

### SUMMARY OF THE INVENTION

In accordance with one aspect of the present invention, an autonomous airship designed specifically for flight in the lower stratosphere with the capability for maintaining a fixed position over a point on the surface of the earth is disclosed. Additionally, the airship provides autonomous control and navigation between predetermined waypoints, or may be programmed to remain within the optical line of sight of a predetermined position on the surface of the earth by matching the speed of the wind.

Other features of the airship embodying the present invention include construction from high strength, light-weight, polymer-based film materials for strength, and transparent/translucent material for collection of solar energy by internally-mounted solar arrays. The autonomous airship can be launched in an uninflated condition and does not require control or propulsion during ascent. The internally mounted arrays reduce aerodynamic drag, provide a pointing capability for maximum solar energy collection, are cooled by an air duct, and are contained within a separate chamber which permits access to the arrays from the outside of the airship.

The airship embodying the background of the present invention may include a hull defining an enclosed cavity, a lifting gas, a forward ballonet, an aft ballonet, and an equipment bay disposed within the cavity, the bay defining an enclosed chamber, and an overall air management subsystem, at least one solar array, a multiplicity of energy storage units, and an autonomous control system disposed within the bay, the chamber being in fluid communication with the forward and aft ballonets; a propulsion system attached to the hull and in electrical communication with at least one solar array and the energy storage units; and a multiplicity of tail fins attached to the hull. The air management subsystem may further comprise a forward air management subsystem having a blower and an aft air management subsystem, the forward air management subsystem being in fluid communication with the forward ballonet and the bay, and the aft air management subsystem being in fluid communication with the aft ballonet and the bay. The forward air management subsystem may comprise a forward ballonet pressure sensor and the aft air management subsystem may comprise an aft ballonet pressure sensor. The forward and aft air management subsystems may also each comprise a lifting gas release valve, the valves being in fluid communication with the hull.

The propulsion system may further comprise a gimbal housing, a motor and transmission assembly, a motor pivot, and a propeller, the housing being fixedly attached to the hull and pivotally mounted to the pivot, the pivot being fixedly attached to the motor and transmission assembly, the assembly being attached to the propeller.

At least one solar array may be aligned with the central axis of the hull, and may be gimballed about respective elevation and azimuth axes of the array. At least one solar array may provide electrical power to the propulsion system during daytime flight operations and the multiplicity of energy storage units may provide electrical power to the propulsion system during night time flight operations.

The autonomous control system the overall air management subsystem, and the propulsion system may provide navigational control between selected waypoints, wherein the autonomous control system may include a GPS receiver and a compass. Therefore, the overall air management subsystem, the autonomous control system, and the propulsion system may be adapted to control movement of the airship about its center of gravity.

The hull may have an outer surface and a multiplicity of tail fins may be disposed in a first position contiguous with the outer surface of the hull during ascent to flight altitude and the multiplicity of tail fins may move to a second position non-contiguous with the surface of the hull as the hull inflates due to a reduction in atmospheric pressure.

The present invention includes a hull defining an enclosed cavity; a lifting gas and at least one solar array disposed within the cavity; a forward ballast reservoir; an aft ballast reservoir; a ballast management subsystem attached to the hull and in fluid communication with the forward and aft ballast reservoirs; an equipment bay attached to the hull, the bay having a multiplicity of energy storage units and an autonomous control system; a propulsion system attached to the hull and in electrical communication with at least one solar array and the energy storage units; and a multiplicity of tail fins attached to the hull. The ballast management subsystem may further comprise fluid lines between the forward and aft ballast reservoirs, a ballast valve, and a ballast exhaust.

This airship propulsion system of the present invention may further comprise a gimbal housing, a motor and transmission assembly, a motor pivot, and a propeller, the housing being fixedly attached to the hull and pivotally mounted to a pivot, the pivot being fixedly attached to a motor and transmission assembly, the assembly being attached to the propeller.

In this embodiment at least one solar array may be aligned with a central axis of the hull, and the array may be gimballed about respective elevation and azimuth axes of the array. At least one solar array may provide electrical power to the propulsion system during daytime flight operations and the multiplicity of energy storage units may provide electrical power to the propulsion system during night time flight operations.

The autonomous control system, the ballast management subsystem, and the propulsion system in this embodiment of the present invention may provide navigational control between selected waypoints, wherein the autonomous control system may include a GPS receiver and a compass. Therefore, the ballast management subsystem, the autonomous control system, and the propulsion system may be adapted to control movement of the airship about its pitch and yaw axes.

The hull in the embodiment of the present invention may have an outer surface and a multiplicity of tail fins may be disposed contiguous with the outer surface of the hull during ascent to flight altitude, wherein the multiplicity of tail fins may move to a second position non-contiguous with the surface of the hull as the hull inflates due to a reduction in atmospheric pressure.

### BRIEF DESCRIPTION OF THE DRAWINGS

FIG. 1 is a side view of an embodiment of the background of the autonomous airship of the present invention.
FIG. 2 is a schematic block diagram of the pressurization system for the ballonets within the embodiment of the background.
FIG. 3 is a side view of a forward ballonet air management subsystem.
FIG. 4 is a side view of an aft ballonet air management subsystem.
FIG. 5 is a perspective view of the propulsion system for an airship.
FIG. 6 is a side view of the equipment bay assembly for the embodiment of the background.
FIGS. 7A and 7B are perspective views of one of the internally-mounted solar array panels which provide electric power to the embodiment of the background.
FIG. 8 is a schematic block diagram of the power supply system for the embodiment of the background.
FIG. 9 is a block diagram of the controller interface circuitry for directing autonomous airship operations.
FIG. 10 is a perspective view of an airship illustrating various movement axes.
FIG. 11 is a side view of an embodiment cf the autonomous airship of the present invention.
FIG. 12 is a schematic view of the ballast management subsystem for an embodiment of the autonomous airship of the present invention.
FIG. 13 is a perspective view of the rectangular solar array assembly for an embodiment of the autonomous airship of the present invention.
FIG. 14 is a schematic block diagram of the power supply subsystem for an embodiment of autonomous airship of the present invention.

### DESCRIPTION OF THE PREFERRED EMBODIMENT

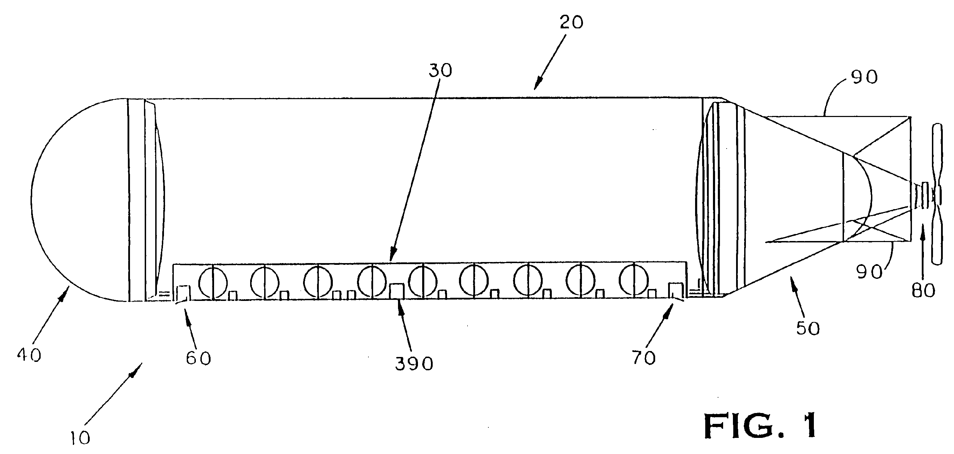

Turning now to FIG. 1, a side view of the embodiment of the background of the autonomous stratospheric airship **10** can be seen. The hull **20** is made from a clear or relatively transparent polymer-based film, preferably 0.5 mm thick. The material is selected to withstand pressures resulting from changes in lifting gas temperatures contained within. The hull **20** is shaped as a stream-lined body with a hemispherical front and a conical rear, and the overall size is determined by the mass of the payload 390, while the length to width ratio is preferably 5:1. As the result of experimentation, it has been found that a design capable of carrying 18 pounds of useful load to 70,000 feet is approximately 125 feet long, and 25 feet in diameter.

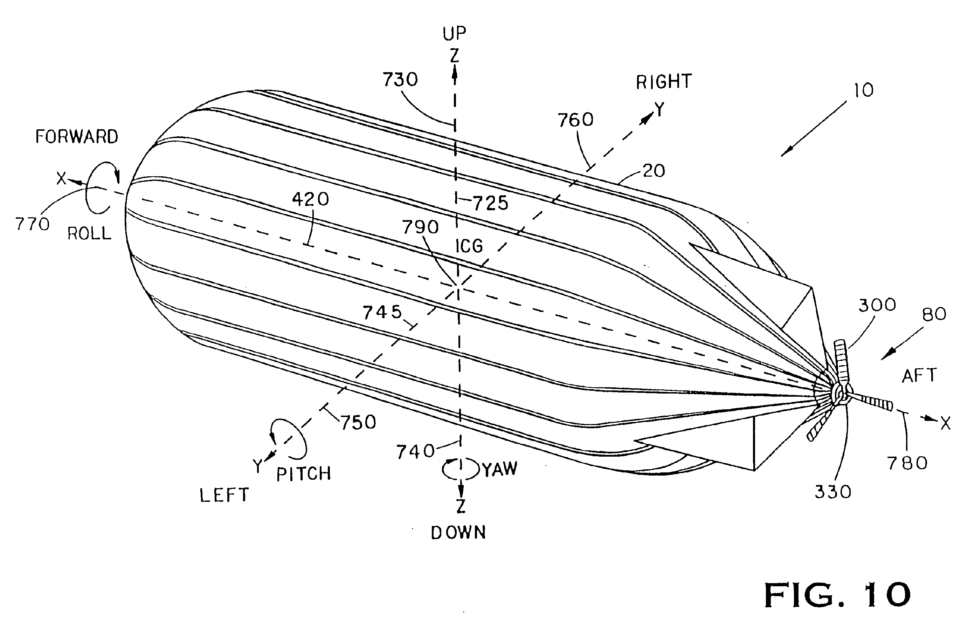

Attached to the conical section of the hull **20** are a multiplicity of self-deployed tail fins **90**, preferably three in number. The fins **90** are preferably made of the same film material as the hull **20**. The fins **90** are supported by a self-erecting mechanism that deploys as the hull **20** body inflates during ascent. The hull **20** center of buoyancy is controlled by two internal ballonets, forward ballonet **40** and aft ballonet **50.** Each ballonet can be used independently to control the location of the center of buoyancy, consequently effecting the airship's **10** movement about the pitch axis **745** (see FIG. 10). Alternatively, the ballonets **40** and **50** can be used together to cause the airship **10** to ascend or descend.

The airship **10** completely encloses an internal equipment bay **30** chamber which houses solar arrays **340**, forward and aft air management sub-systems **60** and **70**, a control system **390**, and a mission-specific payload. While the hull **20** is filled with lifting gas comprising hydrogen, helium, or ammonia, the bay **30** is filled with air drawn from the atmosphere outside of hull **20** and is circulated within the bay **30** for cooling of internal components. The bay **30** can also be pressurized and so function as an additional buoyancy control mechanism for airship **10**. To maintain the integrity of hull **20**, the contents of bay **30** can be accessed from the exterior of airship **10** by means of a zipper, zip-lock plastic closure or other relatively air-tight closure (not shown).

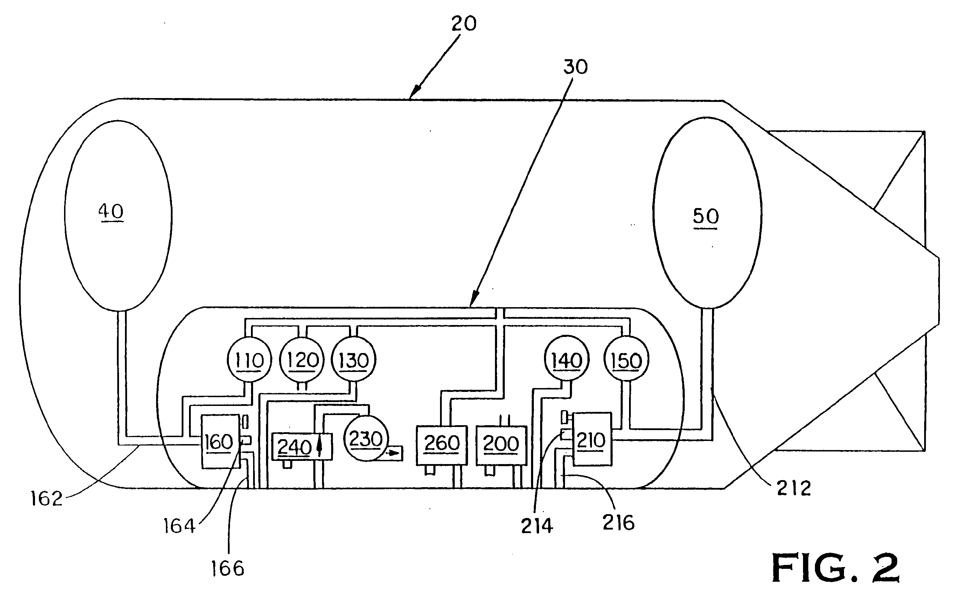

FIG. 2 depicts a schematic block diagram of the pressurization system used to control the air flow and pressurization of the equipment bay **30** and the forward and aft ballonets **40** and **50**. Forward ballonet **40** is connected to forward ballonet valve **160** by way of forward ballonet fill-tube **162**. Forward ballonet pressure sensor **110** is used to monitor the pressure differential between the forward ballonet **40** and the lifting gas pressure within hull **20**. Forward ballonet valve **160** is also connected to the atmosphere within the equipment bay **30** by way of forward ballonet equipment bay intake **164.** Forward ballonet **40** may exhaust air to the atmosphere external to the hull **20** by means of forward ballonet atmospheric exhaust **166.** Thus, forward ballonet **40** may take in air from the atmosphere surrounding hull **20** by way of forward ballonet equipment bay intake **164,** or exhaust air to the atmosphere surrounding hull **20** by way of forward ballonet atmospheric exhaust **166.**

Similarly, rear ballonet **50** is connected to aft ballonet valve **210** by way of aft ballonet fill tube **212.** The differential pressure between the aft ballonet **50** and the lifting gas within hull **20** is measured by aft ballonet pressure sensor **150.** Aft ballonet **50** operates in a manner similar to forward ballonet **40;** that is, aft ballonet **50** may take in air from the atmosphere surrounding hull **20** by way of aft ballonet equipment bay intake **214**, and may exhaust air to the atmosphere surrounding hull **120** by way of aft ballonet atmospheric exhaust **216**.

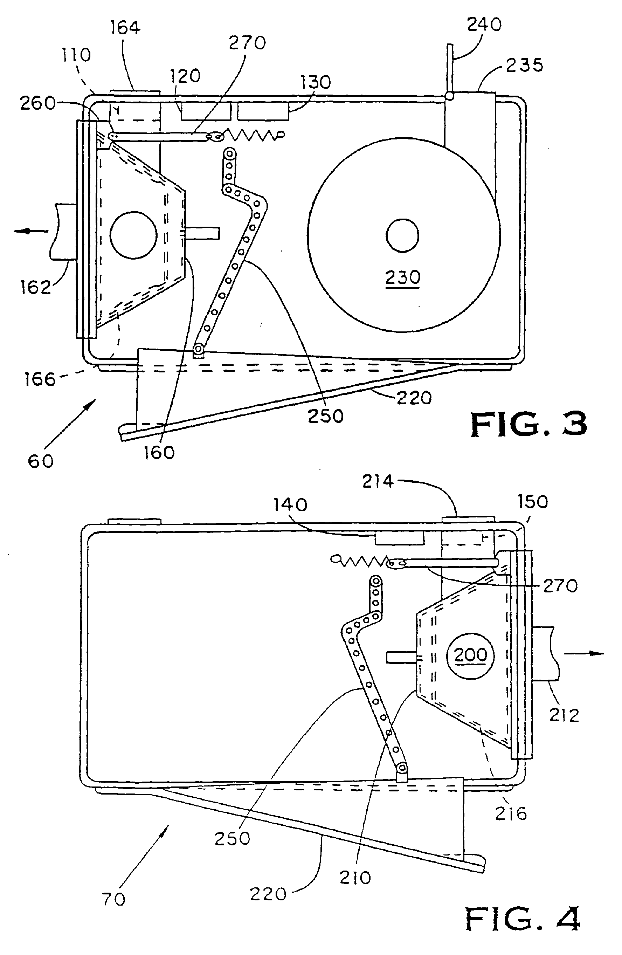

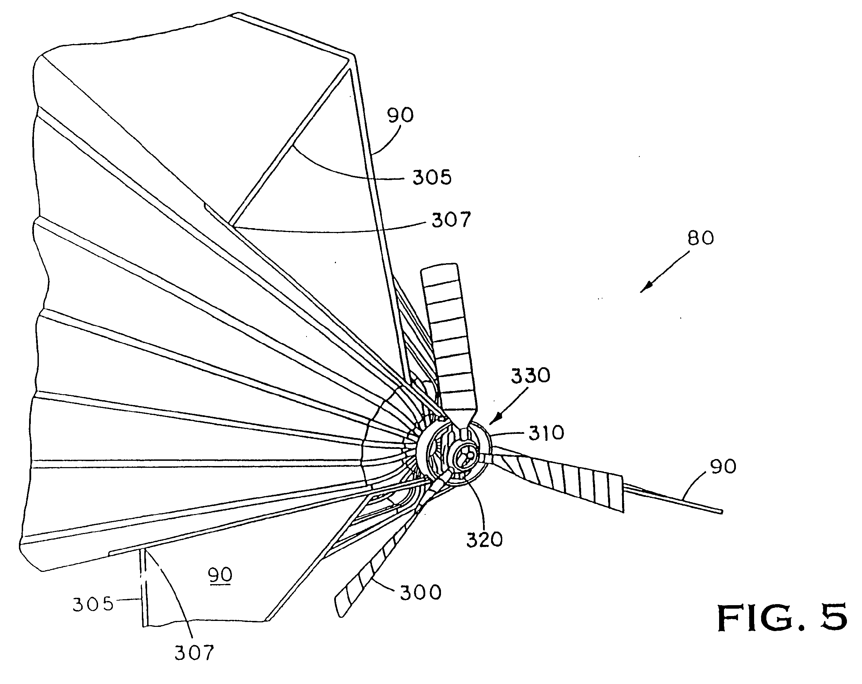

The physical implementation of the airship **10** air management sub-system is illustrated in FIGS. 3 and 4. FIG. 3 depicts a side view of the forward air management sub-system **60**, and FIG. 4 depicts a side view of the aft air management sub-system **70**. Turning now to FIG. 3, it can be seen that the forward air management sub-system **60** provides a housing for the forward ballonet valve **160**, forward ballonet pressure sensor **110**, equipment bay pressure sensor **120**, hull pressure sensor **130**, and blower motor **230**. Forward air management sub-system **60** also incorporates a scoop **220** to further assist in air flow control.

During normal operations, the blower motor **230** will take in air from the atmosphere surrounding hull **20** via scoop **220** and pressurize the equipment bay **30** by means of equipment bay atmospheric intake **235** and check valve **240**, which prevents release of pressurized air from equipment bay **30** back into the atmosphere. The pressure within the hull **20** is monitored by hull pressure sensor **130.** In order to pressurize the forward ballonet **40** so as to pitch the airship **10** downward or cause the airship **10** to descend (assuming a similar action by aft air management sub-system **70**), the forward ballonet valve **160** is operated so as to direct pressurized air from the equipment bay **30,** through forward ballonet equipment bay intake **164** to the forward ballonet **40** by way of forward ballonet fill tube **162.** If it is desired to pitch the airship **10** upward or to ascend (assuming a similar action conducted with aft air management sub-system **70**), the forward ballonet valve **160** can be operated so as to exhaust the forward ballonet **40** air by way of the forward ballonet fill tube **162** and the forward ballonet atmospheric exhaust **166** port into the atmosphere surrounding the hull **20** by way of scoop **220**. The operation of scoop **220** is controlled by scoop actuator **250**. If the pressure within the equipment bay **30** and forward ballonet **40** are as desired for a given flight attitude and altitude, then the forward ballonet valve **160** can be operated so as to close off the forward ballonet fill tube **162** and prevent the escape of any air from the forward ballonet **40**. As a safety measure, hull pressure sensor **130** is used to monitor the lifting gas pressure exerted within hull **20** and can be used to activate a lifting gas relief valve **260** by way of a lifting gas release actuator **270** so as to dump lifting gas to the atmosphere and relieve any overpressure situation within the hull **20**.

Turning now to FIG. 4, it can be seem that aft air management sub-system **70** is identical to forward air management sub-system **60**, with the exception of the sensors housed therein, the blower motor **230**, and its associated check valve **240**. Atmospheric pressure sensor **140** is housed in the aft air management sub-system **70** enclosure, along with the aft ballonet pressure sensor **150**. Inflation and deflation of the aft ballonet **50** occurs in a similar fashion to that of forward ballonet **40**, except that air for the aft ballonet **50** is taken directly from the equipment bay **30**, and is supplied from the blower motor **230** located in the forward air management sub-system **60.** That is, the aft ballonet **50** is inflated by operation of the aft ballonet valve **210** so as to create a path between the aft ballonet equipment bay intake **214** and the art ballonet fill tube **212.** The aft ballonet **50** is deflated by operating the aft ballonet valve **210** so as to create a path between the aft ballonet fill tube **212** and the aft ballonet atmospheric exhaust **216**. The scoop **220** on the aft air management sub-system **70** can likewise be operated to assist in exhausting air from the aft ballonet **50**.

The aft air management sub-system **70** also has the capability of depressurizing the hull **20** by activating a lifting gas relief valve **260** by means of lifting gas release valve actuator **270**. By operating the aft ballonet valve **210** so as to create a path between the equipment bay intake **214** and the equipment bay outlet valve **200**, it is also possible to exhaust air from the equipment bay **30** into the atmosphere surrounding the hull **20**.

The airship **10** is propelled by a propulsion system **80** comprising a propeller **300**, driven by a motor and transmission assembly **330**, as shown in FIG. 5. Left and right directional control of the airship **10** is provided by moving the motor and transmission assembly **330** about the axis of the motor pivot **320**, which is mounted within the gimbal housing **310**. The propeller **300** is preferably a three-bladed fixed-pitch type, but a variable-pitch type propeller **300** may be used without detracting from the spirit of the invention. Those skilled in the art will readily recognize the advantages and disadvantages involved in choosing between these two types of propellers.

FIG. 5 also illustrates the tail fins **90** of the airship **10**, which are used to enhance in-flight stability about the pitch axis **745**, yaw axis **725**, and the hull central axis (or roll axis) **420** of the airship **10** (see FIG. 10). Tail fins **90** are most preferably three in number, and each comprise a pivoting mast **305** connected to a fin pivot **307.** This manner of construction allows each of the tail fins **90** to lay along the surface of the hull **20** of the airship 10 during initial launch and, as the hull **20** begins to expand due to the decrease in atmospheric pressure surrounding it, the tail fins **90** will deploy into their extended position away from hull **20** (as illustrated in FIG. 5) due to the rotation of the mast **305**.

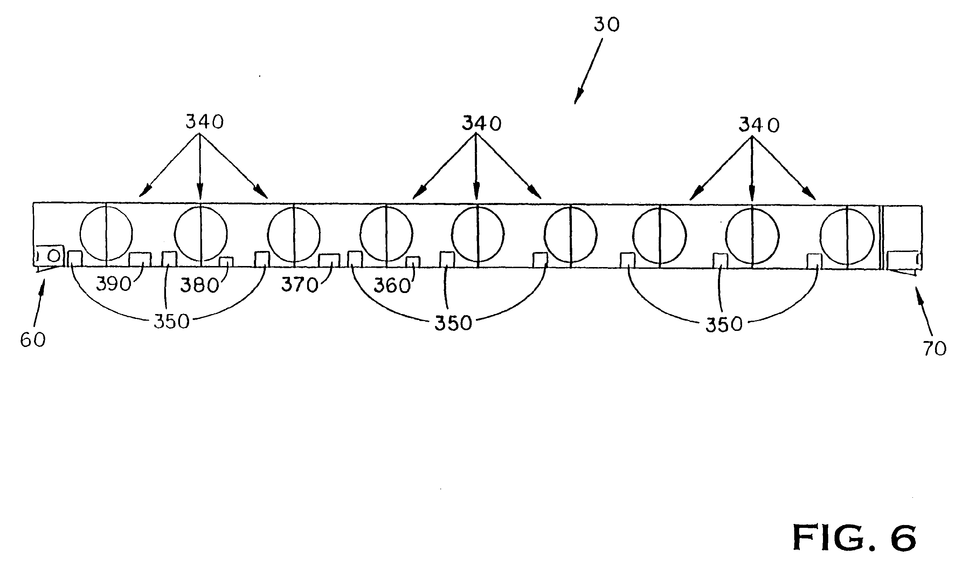

FIG. 6 illustrates the equipment bay **30** and its contents comprising internally-gimballed solar arrays **340**, energy storage units **350**, emergency system **360**, autonomous control system **390,** communications system **380,** and the emission-specific payload **370.** As mentioned previously, the forward and aft air management sub-systems **60** and **70** can be used to pressurize and exhaust the equipment bay **30**. In addition, the constant induction of air by way of forward air management sub-system **60** into equipment bay **30** can be used to cool the contents of equipment bay **30**, especially solar arrays **340**. Pressurizing the equipment bay **30** with air from the atmosphere surrounding hull **20** also serves as an additional buoyance control mechanism for the airship **10**.

All of the energy used to power the propulsion system **80** is provided by the solar arrays **340**. During the day, solar energy can be directly applied to the propulsion system **80**, while night time energy is supplied by energy storage units **350**, preferably deep-cycle batteries well known in the art, which are charged by the solar arrays **340** during the day.

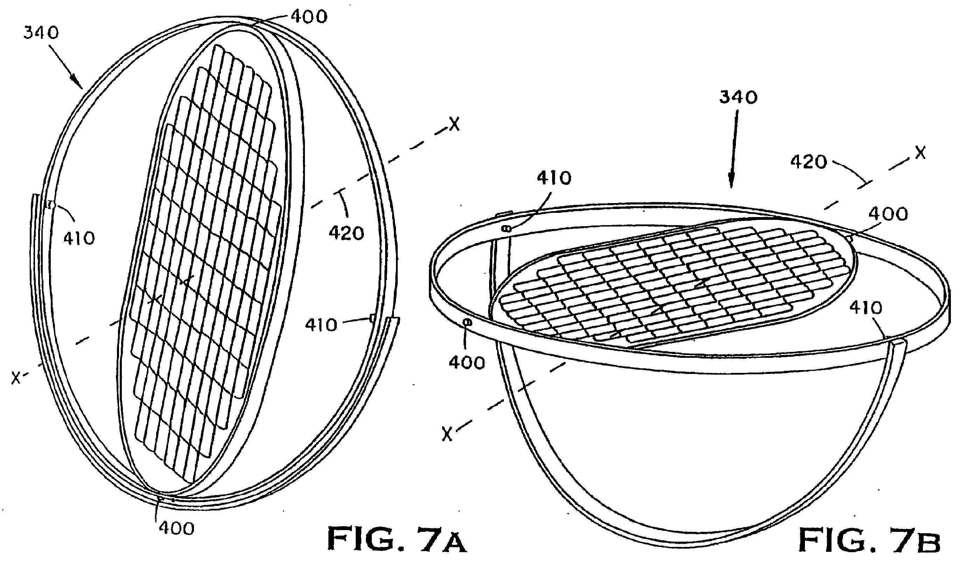

The solar energy collection system consists of a multiplicity of arrays **340** that are installed within the equipment bay **30**, which is located within the hull **20**. As shown in FIGS. 7a and 7b, the arrays **340** are mounted on gimbals, denoted as azimuth rotation pivot **400** and elevation rotation pivot **410**. These two axes of rotation, combined with the orientation of the arrays **340** along the hull central axis **420**, allow pointing the solar array **340** panels to obtain maximum collection efficiency, regardless of the position of the airship **10** with respect to the sun. Internally mounting arrays **340** permit operation of the airship **10** without the associated aerodynamic drag of externally mounted solar panels. In addition, the construction of the airship **10** makes it possible to duct cooling air around the arrays **340** and other contents of the equipment bay **30** without breaching the integrity of the main hull **20**, which also serves as the main lifting gas chamber. The equipment bay **30** is equipped with any of several closures well known in the art, such as zippers or plastic zip-lock devices (not shown) which provide direct access through the equipment bay **30** for installation servicing of the equipment at any time prior to launch, without affecting the integrity of the hull **20**. The transparency or translucency of the hull **20** can be varied to affect the amount of solar energy collected by the arrays **340**.

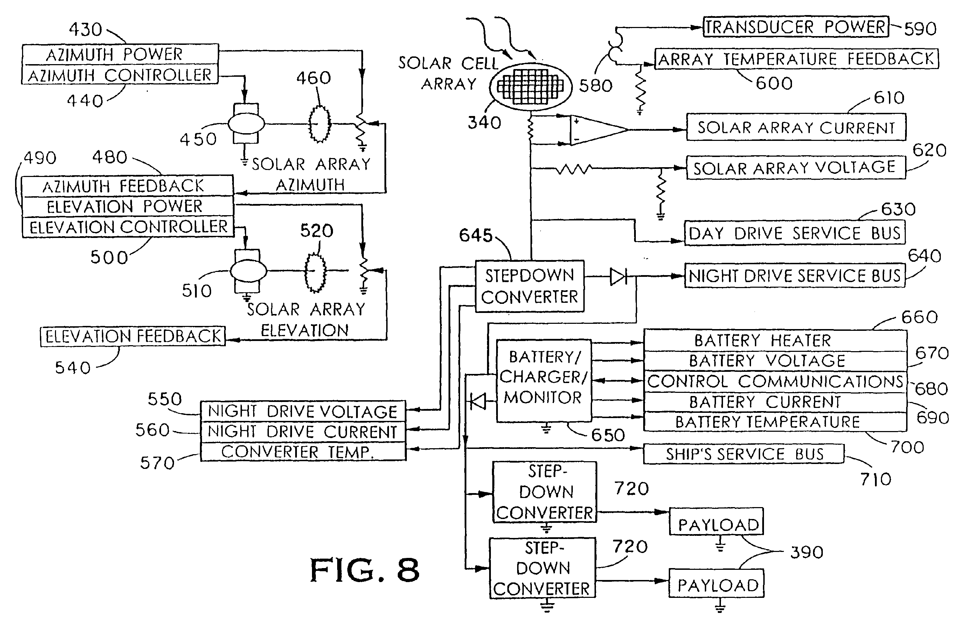

Turning now to FIG. 8, the components for the energy provision and storage system for the airship **10** can be seen. Each solar array **340** is moved about its azimuth rotation pivot **400** by means of an azimuth motor **450**, which is directed by an azimuth controller **440**, and powered by an azimuth power source **430**, derived from energy storage units **350** distributed throughout the equipment bay **30**. Similarly, the arrays **340** are moved about their elevation rotation pivots **410** by an elevation motor **510**, which is directed by an elevation controller **500** and powered by an elevation power source **490**, also derived from energy storage units **350**.

The activity of azimuth controller **440** is effected by the azimuth measurements derived from the azimuth feedback signal **480**, provided by the azimuth transducer **460**. Similarly, the activity of elevation controller **500** is influenced by the elevation feedback signal **540** provided by the elevation transducer **520.** Both the azimuth and elevation controllers **440** and **500** are programmed to operate by way of proportional, integral, or derivative control, or some combination of these methods, as is well known in the art. Other feedback-based control systems are also anticipated by the present invention.

During the day, solar arrays **340** are connected so as to provide a relatively high motor drive voltage to the day drive service bus **630**, preferably about 136 volts DC. The solar array current **610** and solar array voltage **620** are monitored by the autonomous control system **390** (not shown). Step down converter **645** operates to supply a battery charger/monitor **650** with sufficient current to charge the energy storage units **350** during daytime operations. Energy storage units **350**, which may consist of lithium-ion batteries, or other sources of storage well known in the art, are monitored with respect to several parameters, including battery voltage **670**, battery current **690**, and battery temperature **700**. If necessary, battery heaters **660** can be activated to bring the energy storage units up to a predetermined charging or operational temperature for a maximum efficiency. The monitored parameters are communicated to the autonomous control system **390** and communications system **380** by way of a control communication interface **680**.

During nighttime operations, the propulsion system **80** is powered by way of night drive service bus **640**. The night drive voltage **550**, night drive current **560** and converter temperature **570** are also monitored. The resulting data is also communicated to the autonomous control system **390** and communication system **380**.

The voltage derived from the step-down converter **645** and used to energize the night drive service bus **640** and the battery charger/monitor **650,** can be further reduced by way of step-down converters **720,** and used to power various payload **370** requirements. A standard avionics power bus, namely, ship service bus **710**, provides a standardized DC voltage to the contents of the equipment bay **30.** The ship service bus **710** is preferably operated at a voltage of 28 volts DC.

An array temperature transducer **600,** powered by a transducer power module **590** is used to determined the temperature of the solar arrays by way of an array temperature transducer **580.** If the arrays **340** exceed some pre-determined temperature, then the forward and aft air management sub-systems **60** and **70** can be activated to cool the arrays **340** to a desired temperature. The array temperature monitoring activity, as well as the cooling activity are directed by the autonomous control system **390**.

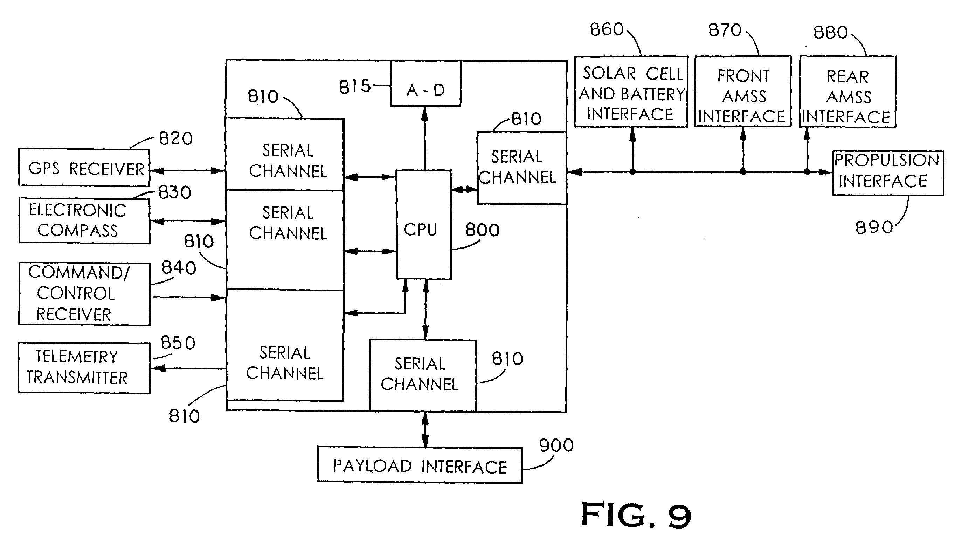

FIG. 9 illustrates a block diagram of the autonomous control system **390**. While preferably implemented with a central processor **800** which communicates via a multiplicity of serial channels **810** and an analog-to-digital converter **815**. However, specialized and more complex interfaces, such as may be utilized by the airship **10** energy storage system, the front and rear air management sub-systems **60** and **70**, and the propulsion system **80**, may be specially constructed and implemented as a solar cell and battery interface **860**, a front air management sub-system interface **870**, a rear air management sub-system interface **880**, and a propulsion interface **890**. Payload interface **900** will normally be specially constructed to interface to whatever mission-specific payload **370** is carried by the airship **10**. A Global Positioning System satellite (GPS) receiver **820**, electronic compass **830**, command/control receiver **840,** and telemetry transmitter **850** are also employed by the airship **10** to complete the autonomous control function. Included within the capabilities of airship **10** is the transmission of acquired data from the various transducers and sensors on board airship **10**, and the payload **370**. Command/control receiver **840** enables the reception of operational and emergency instructions from the ground control station (not shown) which monitors the progress of the airship **10** on any specific mission. The GPS receiver **820** enables exact positional monitoring and control of the airship **10,** while the electronic compass **830** provides for dead-reckoning capability during periods where the GPS receiver **820** is incapable of proper function. The autonomous control system **390**, combined with the operation of the air management sub-systems **60** and **70**, and the propulsion system **80**, provide an airship **10** capable of autonomous operation between pre-selected or commanded waypoints. The internally-gimballed solar arrays **340** can be pointed for maximum collection efficiency based on geographical location, date, and time. Command control and data reception can also be interactively applied to the payload **390**.

The autonomous control system can be programmed to select different speeds for day and night operations to maintain the average location of the airship **10** over a specified point on the surface of the earth. Properly selected, the speed schedule selected for airship **10** will optimize use of the solar arrays **340** and the energy storage units **350** to maximize the average speed of the airship **10.** When the prevailing winds are less than the maximum airship **10** design speed, excess power is available to reposition the airship **10** with respect to the pitch axis **745**, yaw axis **725**, and the hull central axis **420**, as illustrated in FIG. 10.

The propulsion system **80** propels the airship **10** with forward movement **770** as long as the electric power available to the motor and transmission assembly **330** is great enough to overcome the prevailing winds, less power (or no power) can also be applied to the motor and transmission **330** so that airship **10** in fact travels with aft movement **780.** By moving the motor and transmission assembly **330** about the axis of motor pivot **320**, the line of propulsion for the propeller **300** can be moved so as to effect left movement **750** or right movement **760** of the airship **10.** As mentioned previously, the forward and aft ballonets **40** and **50** can also be pressurized independently so as to cause downward movement **740** (if both are pressurized), or upward movement **730** (if both are deflated). The sophisticated combination of autonomous control system **390,** combined with the actions of the forward and aft air management sub-system **60** and **70**, and the motor pivot **320** of the propulsion system **80,** provide an airship **10** which is completely controllable about the airship's center of gravity **790.**

The autonomous stratospheric airship **10** can be used for many different applications, including provision of a vehicle platform for: large terrestrial viewing areas with a long flight duration (e.g. exoatmospheric research); communication relay operations (e.g. radio frequency transponder for voice, data, video etc.; store and forward RF data; signal interception; or direct broadcast); a terrestrial surveillance platform with camera and sensors; surveillance of the atmosphere or space; and a platform for scientific and atmospheric research.

The autonomous stratospheric airship **10** is designed to be a neutrally buoyant structure designed specifically for operations in the lower stratosphere (i.e. 60,000-100,000 feet) it does not require aerodynamic lift, and the hull **20** can be filled with any gas that is lighter than air, including hydrogen, helium, or ammonia. Use of a thin polymeric hull material allows inexpensive and light-weight construction of a hull **20** which is able to contain the lifting gas pressure while isolating the equipment bay **30** from the surrounding atmosphere. The airship **10** can be launched and climbs to altitude much in the same way as a scientific superpressure balloon, and no control or propulsion is required to effect such a launch. The solar regenerative electric energy collection and storage system provides propulsion during the day and night, and continuous operation of powered payloads **370.** Internally-gimballed solar arrays **340** can be positioned for optimal collection efficiency while having no effect on the aerodynamic profile of the airship **10.**

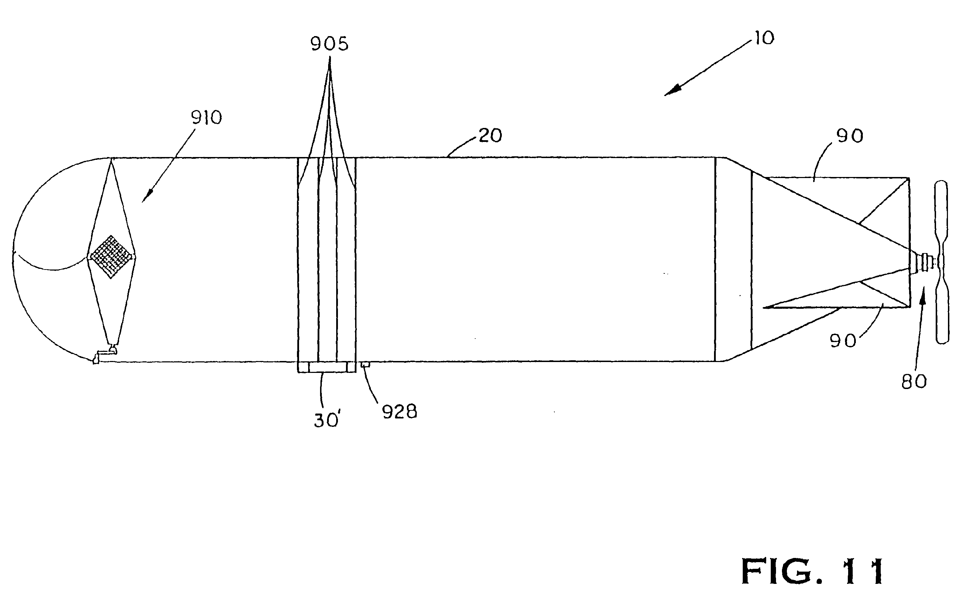

As a way of significantly reducing the cost of providing an autonomous stratospheric airship **10,** an embodiment, as shown in Fig. 11, is provided by the instant invention. While the size and materials for construction of the hull **20** are identical to the embodiment pictured in Fig. 1, in this case, the equipment bay **30'** is located on the exterior of the hull **20,** and suspended from the interior of the hull **20** by payload suspension lines **905**. While a single rectangular array assembly **910** is maintained within the hull **20** for providing operative energy to the airship **10** during the day, the forward and aft ballonets **40** and **50**, along with the forward and aft air management subsystems **70** are no longer used. However, the propulsion system **80**, along with the self-erecting tail fins **90**, are retained.

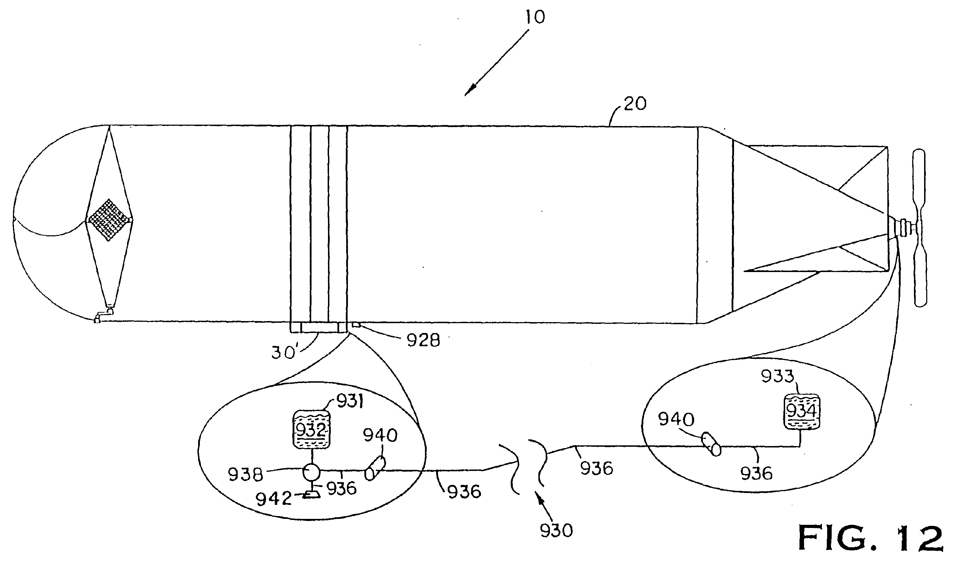

Turning now to Fig. 12, the fluid ballast system **930** can be seen. This simplified ballast system, while not providing the capability of the previous embodiment with respect to altitude control, still enables adjusting the attitude about the pitch axis **745**, as well as in the upward movement **730** direction.

The fluid ballast system **930** comprises a forward ballast reservoir **931**, filled with forward fluid ballast **932**, connected by way of fluid lines **936** to aft ballast reservoir **933**, filled with aft fluid ballast **934**. Forward and aft fluid ballasts **932** and **934** are moved back and forth by way of by-directional pumps **940** and fluid lines **936**, whenever ballast valve **938** is open so as to provide fluid communication between forward ballast reservoir **931** and aft ballast reservoir **933**. To move airship **10** in the upward movement **730** direction, the ballast valve of **938** can be opened so as to provide fluid communication between forward ballast reservoir **931** and ballast exhaust **942,** or aft ballast reservoir **933** and ballast exhaust **942.** While a limited amount of directional control is possible in a downward movement **740** direction, it can only be achieved at the expense of draining helium from the hull **20** by way of a helium release valve **928.** Extra helium may be carried in a canister in the equipment bay **30**, but such operation is not usually practical, due to payload weight limitations.

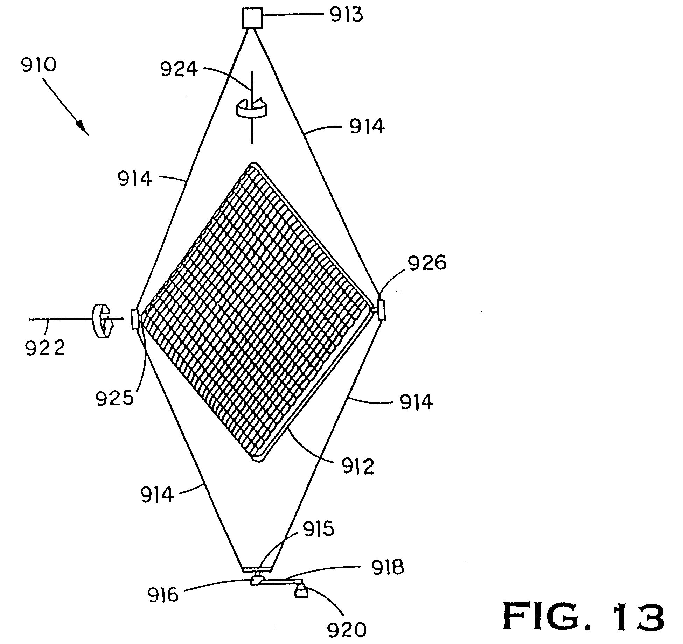

Fig. 13 details the rectangular array assembly **910**, which comprises a rectangular solar array suspended between a Z-axis swivel **913** and a Z-axis drive arm **915** by means of array suspension lines **914**. The rectangular solar array **912** is held at two corners between the Y-axis drive **925** and the Y-axis bearing **926**, so as to pivot about the elevation rotation axis **922**. Similarly, the rectangular solar array **912** can be made to pivot about the azimuth rotation axis **924** by driving the Z-axis drive arm **915** with the Z-axis drive **916**. Vertical movement of the rectangular solar array **912**, due to flexing of the hull **20**, is accommodated by the link arm **918**, which allows the Z-axis drive **916** and the feed-through and mount **920** to move freely. By providing for movement in both the elevation rotation axis **920** and the azimuth rotation axis **924**, the rectangular solar array **912** can be positioned in whatever location is most effective for receiving the maximum amount of solar energy for conversion into electricity. The suspension system shown allows construction of the rectangular array assembly **910** to be lighter and less expensive than that used for the solar arrays **340** illustrated in Figs. 7A and 7B. In fact, the rectangular solar array **912** can even be applied to an inflatable structure, which becomes rigid at flight altitude, and is flexible on the ground.

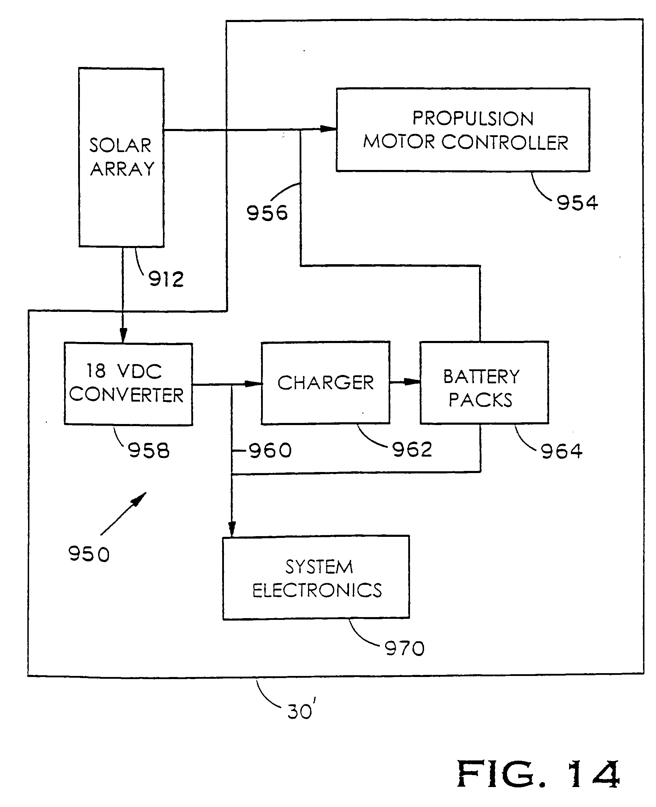

Fig. 14 illustrates the power distribution subsystem **950** contained in the external equipment bay **30'** utilized by the alternative embodiment of the airship **10.** In this case, the rectangular solar array **912** provides power to the motor controller **954** by way of a high voltage bus **956.** An alternative source of power on this bus **956** are battery packs **964.** The rectangular solar array **912** also provides power to an 18 VDC converter **958,** which in turn energizes a charger **962** for the battery packs **964**, and provides power to the system electronics **970** by way of a low-voltage bus **960**. The system electronics **970** in this case can be similar to or identical to the arrangement disclosed in Fig. 9, less the front and rear air management subsystem interfaces **870** and **880**. Instead, a single interface to the fluid ballast system **930** must be implemented to control the bi-directional pumps **940** and the ballast valve **938**.

Although the invention has been described with reference to specific embodiments, this description is not meant to be constructed in a limited sense. Various modifications of the disclosed embodiments, as well as alternative embodiments of the invention will become apparent to persons skilled in the art upon reference to the disclosure herein. It is, therefore, contemplated that the appended claims will cover such modifications that fall within the scope of the invention.

An autonomous stratospheric airship according to a first aspect of the background of the invention comprises
a hull defining an enclosed cavity, a lifting gas, a forward ballonet, an aft ballonet, and an equipment bay disposed within said cavity, said bay defining an enclosed chamber, and an overall air management subsystem, at least one solar array, a multiplicity of energy storage units, and an autonomous control system disposed within said bay, said chamber being in fluid communication with said forward and aft ballonets;
a propulsion system attached to said hull and in electrical communication with said at least one solar array and said energy storage units; and
a multiplicity of tail fins, said fins attached to said hull.

In the airship of the above first aspect, in a second aspect of the background said overall air management subsystem further comprises a forward air management subsystem having a blower and an aft air management subsystem, said forward air management subsystem being in fluid communication with said forward ballonet and said bay, and said aft air management subsystem being in fluid communication with said aft ballonet and said bay.

In the airship of the second aspect said forward air management subsystem further comprises a forward ballonet pressure sensor and said aft air management subsystem further comprises an aft ballonet pressure sensor.

In the airship of the second aspect said forward and aft air management subsystems each comprises a lifting gas release valve, said valves being in fluid communication with said hull.

In the airship of the first aspect said propulsion system further comprises a gimbal housing, a motor and transmission assembly, a motor pivot, and a propeller, said housing being fixedly attached to said hull and pivotally mounted to said pivot, said pivot being fixedly attached to said motor and transmission assembly, said assembly being attached to said propeller.

In the airship of the first aspect said at least one solar array is aligned with the central axis of said hull, and is gimballed about respective elevation and azimuth axes of said array.

In the airship of the first aspect said at least one solar array provides electrical power to said propulsion system during daytime flight operations and said multiplicity of energy storage units provide electrical power to said propulsion system during night time flight operations.

In the airship of the first aspect said autonomous control system, said overall air management subsystem, and said propulsion system provide navigational control between selected waypoints.

In the airship of the first aspect said autonomous control system includes a GPS receiver.

In the airship of the first aspect said autonomous control system includes a compass.

In the airship of the first aspect said overall air management subsystem, said autonomous control system, and said propulsion system are adapted to control movement of the airship about its center of gravity.

In the airship of the first aspect said hull has an outer surface and said multiplicity of tail fins are disposed in a first position contiguous with said outer surface of said hull during ascent to flight altitude and wherein said multiplicity of tail fins move to a second position non-contiguous with said surface of said hull as said hull inflates due to a reduction in atmospheric pressure.

## Claims

1. An autonomous stratospheric airship comprising:
a hull defining an enclosed cavity;
a lifting gas and at least one solar array disposed within said cavity;
a forward ballast reservoir;
an aft ballast reservoir;
a ballast management subsystem attached to said hull and in fluid communication with said forward and aft ballast reservoirs;
an equipment bay attached to said hull, said bay having a multiplicity of energy storage units and an autonomous control system;
a propulsion system attached to said hull and in electrical communication with said at least one solar array and said energy storage units; and
a multiplicity of tail fins, said fins being attached to said hull.

2. The airship of Claim 1 wherein said ballast management subsystem further comprises fluid lines between said forward and aft ballast reservoirs, a ballast valve, and a ballast exhaust.

3. The airship of Claim 1 wherein said propulsion system further comprises a gimbal housing, a motor and transmission assembly, a motor pivot, and a propeller, said housing being fixedly attached to said hull and pivotally mounted to said pivot, said pivot being fixedly attached to said motor and transmission assembly, said assembly being attached to said propeller.

4. The airship of Claim 1 wherein said at least one solar array is aligned with a central axis of said hull, and said array is gimballed about respective elevation and azimuth axes of said array.

5. The airship of Claim 1 wherein said at least one solar array provides electrical power to said propulsion system during daytime flight operations and said multiplicity of energy storage units provide electrical power to said propulsion system during night time flight operations.

6. The airship of Claim 1 wherein said autonomous control system, said ballast management subsystem, and said propulsion system provide navigational control between selected waypoints.

7. The airship of Claim 1 wherein said autonomous control system includes a GPS receiver.

8. The airship of Claim 1 wherein said autonomous control system includes a compass.

9. The airship of Claim 1 wherein said ballast management subsystem, said autonomous control system, and said propulsion system are adapted to control movement of the airship about its pitch and yaw axes.

10. The airship of Claim 1 wherein said hull has an outer surface and said multiplicity of tail fins are disposed contiguous with said outer surface of said hull during ascent to flight altitude and wherein said multiplicity of tail fins move to a second position non-contiguous with said surface of said hull as said hull inflates due to a reduction in atmospheric pressure.
